# EUROPEAN PATENT SPECIFICATION

(11) **EP 0 328 667 B1**
(45) Date of publication and mention of the grant of the patent: **23.11.1994**
(21) Application number: 88906122.2
(22) Date of filing: 22.07.1988
(51) Int. Cl.: G11B 11/10

(54) **MAGNETO-OPTICAL STORAGE**
MAGNETO-OPTISCHER SPEICHER
MEMOIRE MAGNETO-OPTIQUE

(30) Priority: 24.07.1987 JP 186244/87
(43) Date of publication of application: 23.08.1989
(73) Proprietor: MATSUSHITA ELECTRIC INDUSTRIAL CO., LTD., Kadoma-shi, Osaka-fu, 571 (JP)
(72) Inventor: OKAZAKI, Yukinori, Osaka-shi Osaka-fu 536 (JP); KOBUKATA, Mieko, Osaka-shi Osaka-fu 558 (JP)
(74) Representative: Patentanwälte Leinweber & Zimmermann
(86) International application number: JP8800738
(87) International publication number: WO8901221

(56) References cited:
- EP-A- 0 217 067
- No better relevant documents have been found.

## Description

The present invention relates to a magneto-optic memory device using a magneto-optic recording medium such as a magneto-optic disk or the like and, more particularly, to a device having functions to erase/rerecord information.

### BACKGROUND OF THE INVENTION

In recent years, the use of an information recording device of the read only type or write once type using an optical disk to store a large capacity of information has been started. On the other hand, an information recording device of the information erasable and rewritable type using a magneto-optic recording medium or phase change type medium has been developed more and more. Among the erasable and rewritable type recording media, in particular, the magneto-optic recording medium is a recording medium which can be most easily put into practical use in respect of the medium life or reproduced signal characteristics.

However, in the magneto-optic recording medium, it is difficult to perform the erasure/rerecording (overwrite) by overwriting of information which has been realized in a magnetic disk or the like, thereby causing a large obstacle when a magnetic disk is replaced by a magneto-optic disk. This is because, in the case of the magneto-optic recording medium, the heat of a laser beam spot and the external magnetic field are used to record/erase information and the recording/erasing operations are switched by switching coils for generating the external magnetic fields which are arranged at positions away from the magneto-optic recording medium, so that the high speed modulation of a large magnetic field cannot be performed, resulting in a large cause that the erasure/rerecording cannot be performed.

The magneto-optic disk has been disclosed in, for instance, "MAGNETO-OPTIC DISK STORAGE", IEEE Transaction on Magnetics, Vol. MAG-18, No. 6, pages 1233 to 1237, November 1982.

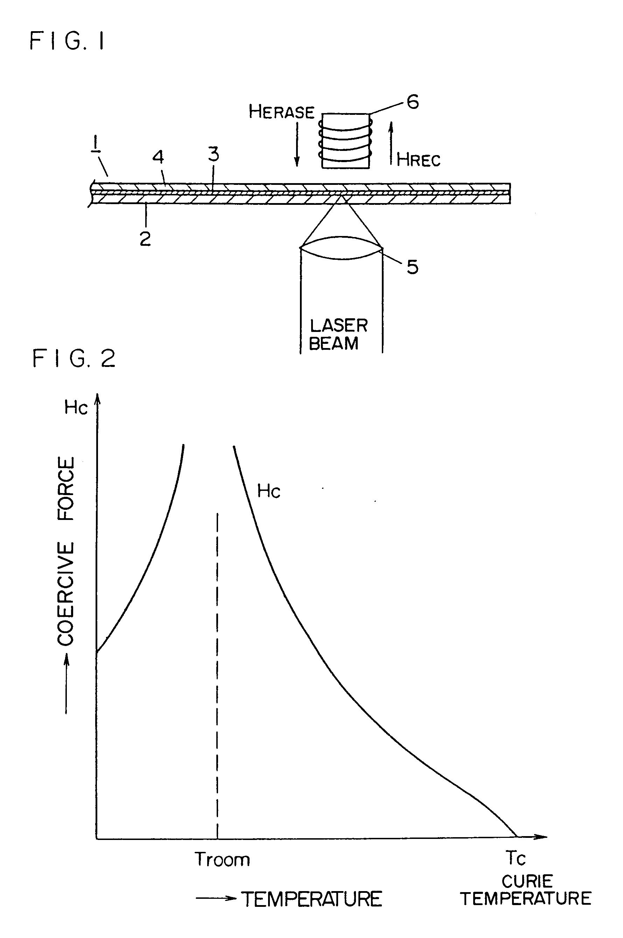

A method of recording and erasing information onto and from the magneto-optic recording medium will be described with reference to the drawings with respect to a magneto-optic disk as an example. Fig. 1 is a diagram showing a conventional construction of the magneto-optic disk. Fig. 2 is a diagram showing temperature characteristics of a magneto-optic film which is used in the magneto-optic disk. A magneto-optic disk 1 is constructed by coating a magneto-optic recording film 3 onto a transparent substrate 2 and by further covering the film 3 with a protective film 4. Reference numeral 5 denotes a condenser lens as a part of an optical system for emitting a laser beam for recording/reproducing and 6 indicates an external magnetic field generating coil for recording.

As shown in Fig. 2, the coercive force of the magneto-optic recording film 3 which has conventionally been used has characteristics such that it has a high value at a room temperature T_{ROOM} and flux reversal is not easily caused by the external magnetic field. It is assumed that the magneto-optic recording film 3 in Fig. 1 has previously been magnetized downwardly and perpendicularly with respect to the film surface before information is recorded. An intensity of the laser beam focused onto the recording film 3 by the condenser lens 5 is enhanced when information is recorded/erased. A temperature of the recording film 3 in the portion to which the laser beam is irradiated is raised to a value near a Curie temperature T_{C}. As shown in Fig. 2, when the temperature of the recording film 3 rises to a value near the Curie temperature T_{C}, its coercive force decreases and the magnetizing direction can be easily reversed by the magnetic field from the outside. In such a state, when an upward magnetic field H_{REC} is given to the recording film 3 by the coil 6, the flux reversal occurs and a magnetic domain having the upward magnetization is formed as an information bit. When information is erased, in a manner similar to the recording, the temperature of the recording film 3 is increased to a value near the Curie temperature T_{C} by the focused laser beam, and, at the same time, a magnetic field H_{ERASE} in the direction opposite to that when recording of the information is applied as an external magnetic field by the coil 6, thereby erasing the information.

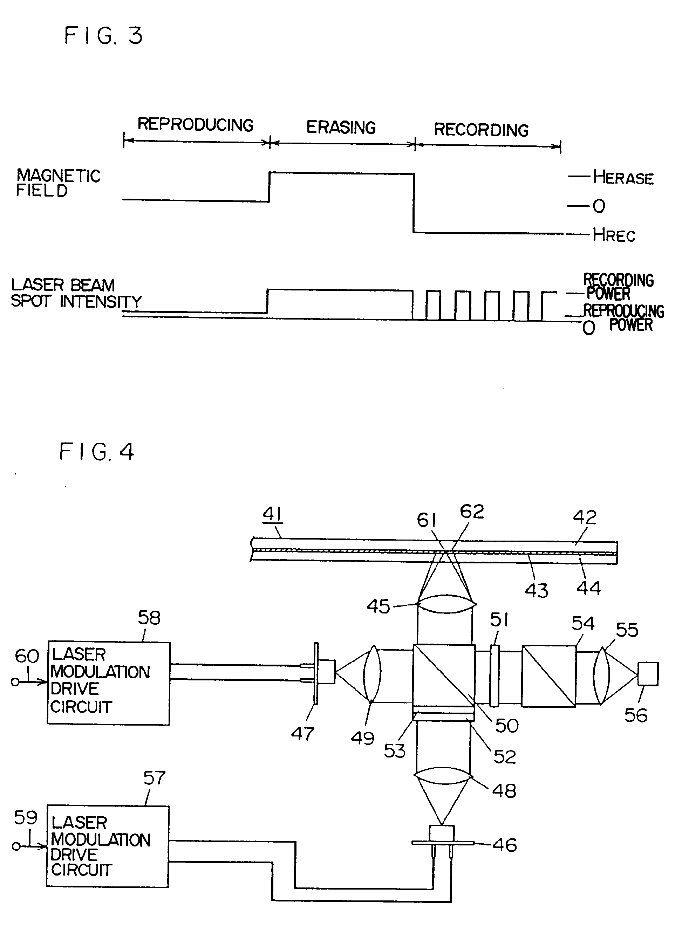

An intensity of magnetic field which is applied by the coil 6 when recording/erasing of information, a direction of the magnetic field, and a change in intensity of a spot of a laser beam will be described by using the drawings. Fig. 3 is a diagram showing magnetic fields upon general reproducing, recording, and erasing of a magneto-optic disk and a change in intensity of a laser beam spot. In Fig. 3, no magnetic field is applied when information is reproduced and the intensity of the laser beam spot is also weakly set. Next, when another information is newly recorded in the portion in which information has already been recorded, there has conventionally been used a method in which the recorded information in such a portion is first erased and, thereafter, new information is recorded. That is, the magnetic field is set to the erasing direction (H_{ERASE}) and the intensity of the laser beam spot is raised and the magnetization of the information recorded portion is aligned to the magnetization in the erasing direction. After that, the setting direction of the magnetic field is reversed to the direction (H_{REC}) of the magnetization in the recording direction and the intensity of the laser beam spot is modulated in accordance with an information signal to be recorded and the flux reversal of the magneto-optic recording film 3 is partially executed, thereby recording information.

However, according to such a conventional recording/erasing method, when new information is over-written to the recording film 3 on which information has previously been recorded, it is necessary that the previous information is first erased and the laser beam is again returned to the information erased track and new information is recorded. It is necessary to trace so as to irradiate twice the same position by the laser beam spot in order to record information once.

On the other hand, in the case of a magnetic recording medium such as a magnetic disk or the like, it is possible to overwrite information by a single tracing operation, so that the information transfer speed of the magneto-optic disk when recording information is the half or less of that in the case of the magnetic disk. Therefore, in order to replace the application field in which the magnetic disk has conventionally been used by the magneto-optic disk, it is necessary for the magneto-optic disk to realize the recording means which is equal to or better than the magnetic disk and to solve the problem such that the information transfer speed is slow.

As a method of performing rerecording in the magneto-optic disk, hitherto, a system for performing the field modulation, a system for reversing the magnetizing direction of recording at every turn of the disk (US-A-4,472,748), a system using a magneto-optic disk medium of a double-layer film structure, or the like has been proposed. However, those systems also have drawbacks. Particularly, in the case of considering an application as a data file in place of the magnetic disk, any of the systems is difficult to be put into practical use.

For instance, in the case of the system using the field modulation, when information is recorded, the light intensity is always set to be high and the direction of the magnetic field which is given by the coil is changed to the recording direction or the erasing direction in accordance with the information signal. However, there is a limitation when the direction of the magnetic field is changed at a high speed in accordance with the information signal. This is because an electromagnetic coil, which is placed at the position which is away from the magneto-optic film by several mm, is used as means for generating the magnetic field which can be modulated, and the large magnetic field of several hundreds Oe is generated on the magneto-optic film, so that the number of turns of the coil, which is used, increases, and the inductance of the coil rises, and the modulation of the coil, that is, the modulation of the magnetic field in the information signal of a high frequency of several MHz is difficult. Therefore, it is difficult to use such a system in the application such as a data file for computers in which a high information transfer speed is required.

In the system for reversing the magnetizing direction at every turn of the disk, two laser beam spots are used, the magnetic field is reversed by the electromagnetic coil at every turn of the disk, and information is recorded onto adjacent recording tracks (which have already been erased one turn before by the foregoing method) under the same magnetic field while erasing the recorded information on one recording track by one of the two laser beam spots which are used. However, in the case of such a system, the switching time of the magnetic field is necessary and an area where information cannot be recorded occurs at a position which the laser beam spot has passed for the switching period of time during one turn of the disk. On the other hand, although such a system is effective in the case of continuously recording relatively large information such as image, music, or the like, it cannot be used in the application such as a data file in which one turn of the disk is divided into several sectors and information is recorded on a relatively small information unit basis.

On the other hand, in the system using the magneto-optic disk of a double-layer film structure which has recently been proposed, an optical head and two magnetic fields are used, the first layer of a small coercive force is erased by only the first magnetic field, the magnetic field in the erasing direction by the erased first layer and the magnetic field in the recording direction by the second external magnetic field are selected, and information is recorded in the second layer. Although such a system can erase and rerecord in principle, a construction of a recording medium becomes complicated and very large magnetic fields are also needed, so that it will be difficult to actually use it. A magnet-optical memory device according to the preamble of claim 1 is known from JP-A-60236137 (see also non-prepublished corresponding US-A-4853912). EP-A-0 217 067 discloses a system in which a multilayer ferrimagnetic recording film is used with a single beam laser to effect rewrite without an external magnetic field generating means.

As mentioned above, in particular, when considering the application as a data file, the magneto-optic disk conventionally had a problem such that it is difficult to overwrite information.

It is an object of the present invention to solve the foregoing problems and to provide means which can realize the erasure and rerecording of information at a high speed in a magneto-optic memory device.

To accomplish the above object, a magneto-optic memory device of the present invention is provided, as laid down in Claim 1.

With this construction, the magneto-optic recording medium, whose compensation temperature lies within a range between the room temperature and the Curie temperature, is used, the magnetic field due to the magnetization of the portions around the information recording position is used as an external magnetic field which is necessary to record/erase information, and further a fact that the magnetizing direction of the film is reversed at temperatures before and after the compensation temperature is utilized. A temperature of the recording film around the recording position is changed between temperatures near the room temperature and the compensation temperature or higher, thereby reversing the direction of the magnetic field at the information recording position by the magnetization of the peripheral portions and erasing/rerecording information.

To realize the operations, according to the construction of the present invention, in addition to the first light spot which is used to record/reproduce information, the second light spot whose center is almost the same as that of the first light spot and which has a larger light spot diameter is focused onto the recording film, and the intensity of the second light spot is modulated by the information signal to be recorded. When the intensity of the second light spot is changed by the information signal, the temperature around the information recording position changes in a range between a temperature of the compensation point or higher and a temperature near the room temperature, the direction of the magnetic field at the information recording position is reversed, the magnetizing direction of the magnetic domain where recording is effected in accordance with the information signal is reversed, and the erasure/rerecording of the information are realized.

Therefore, according to the invention, the rewriting, that is, erasure/rerecording (overwriting) of information onto the signal which has previously been recorded is realized.

### BRIEF DESCRIPTION OF THE DRAWINGS

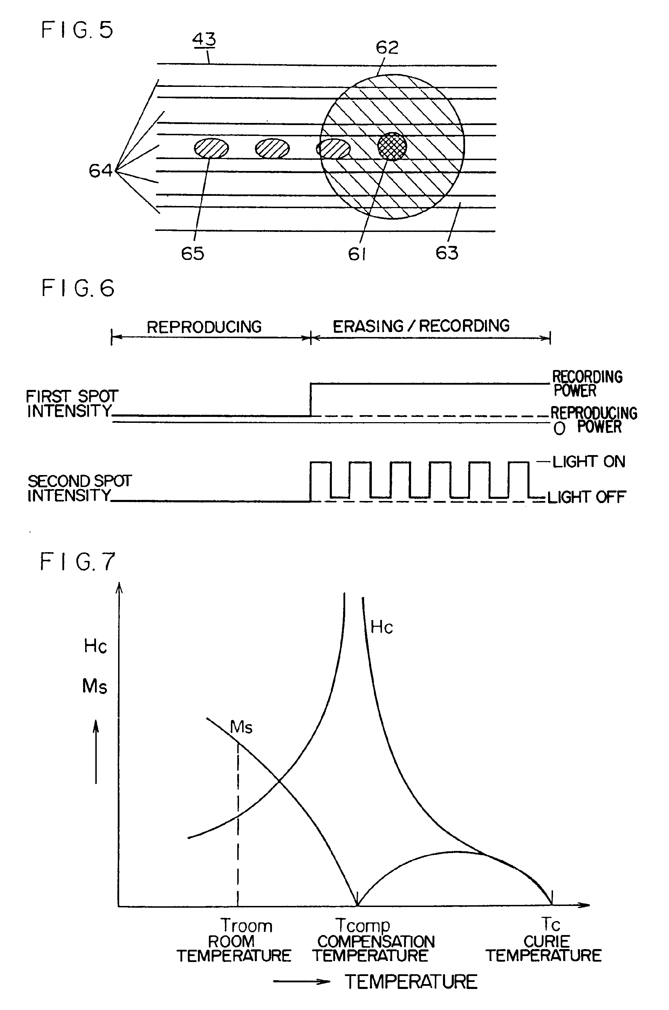

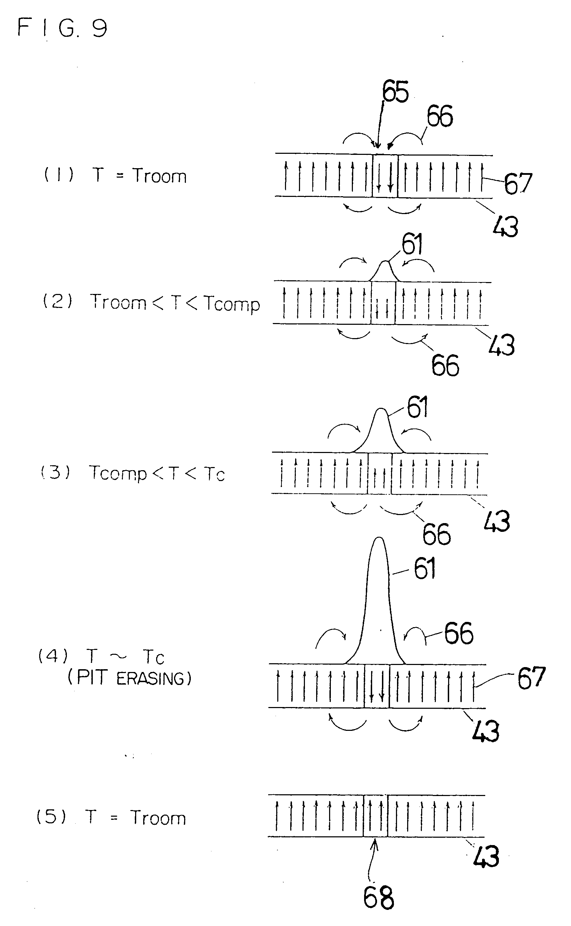

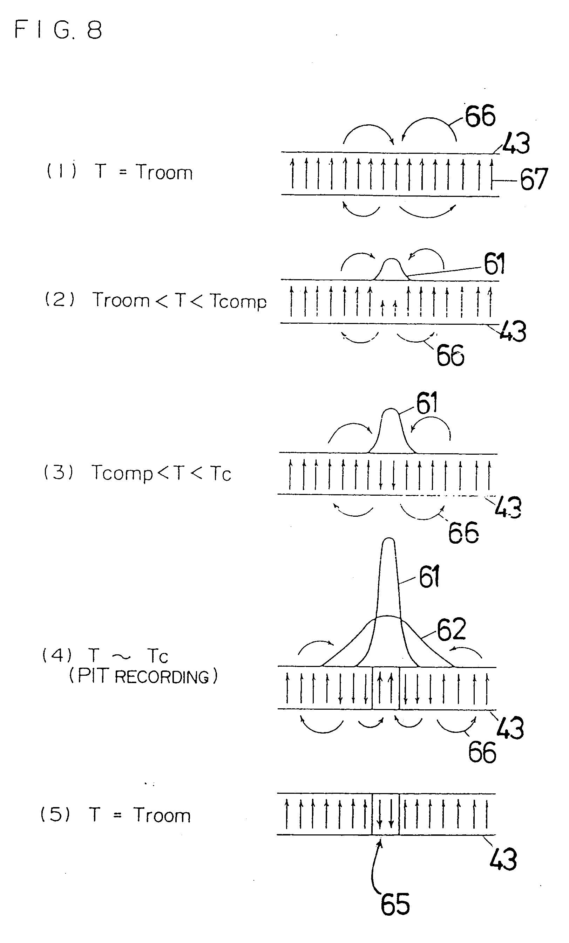

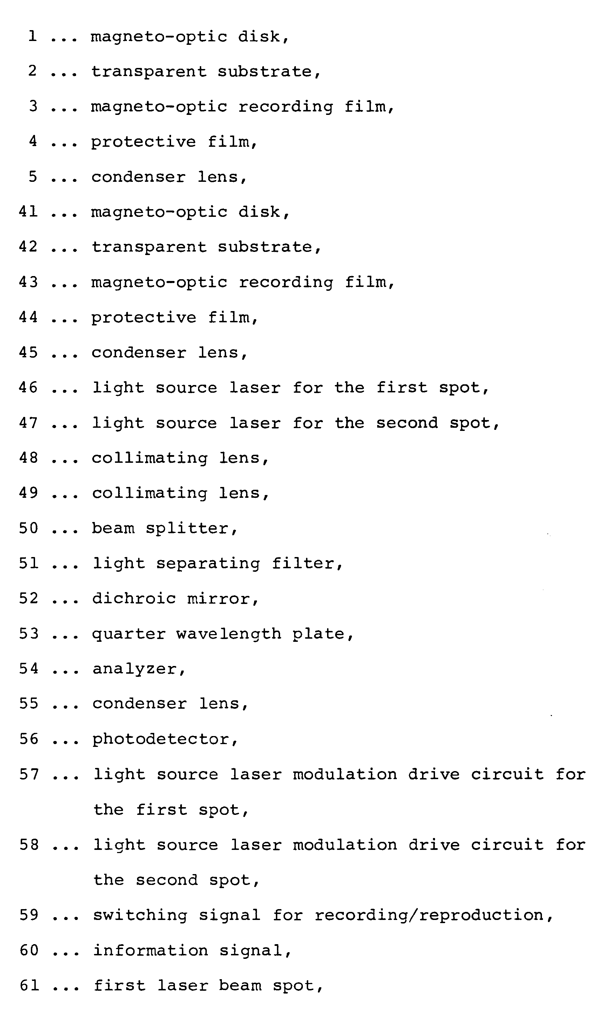

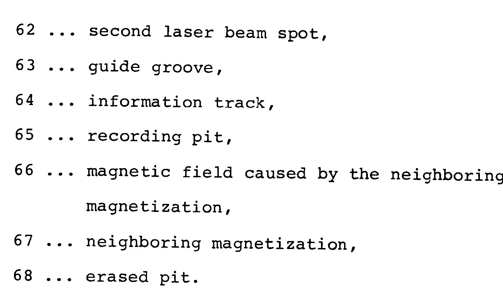

Fig. 1 is a cross sectional view of a magneto-optic memory device of a conventional example; Fig. 2 is a coercive force characteristic diagram of its magneto-optic recording film; Fig. 3 is a characteristic diagram showing its external magnetic field and a change in intensity of a light spot; Fig. 4 is a block diagram showing a construction of a magneto-optic memory device of an embodiment of the present invention; Fig. 5 is a plan view for explaining an arrangement of laser beam spots in the embodiment; Fig. 6 is a characteristic diagram for explaining changes in intensity of the laser beam spots; Fig. 7 is a characteristic diagram for explaining the characteristics of a magneto-optic recording film which is used in the invention; Fig. 8 is a diagrammatical view for explaining the principle of its information recording operation; and Fig. 9 is a diagrammatical view for explaining the principle of its information erasing operation.

### BEST MODE FOR CARRYING OUT THE INVENTION

An embodiment of a magneto-optic memory device of the present invention will be described hereinbelow with reference to the drawings. Fig. 4 is a diagram showing a construction of a magneto-optic disk memory device in an embodiment of the magneto-optic memory device of the invention. A magneto-optic disk 41 which is used in the magneto-optic disk memory device in Fig. 4 has a transparent substrate 44, a magneto-optic recording film 43, and a protective film 42. The memory device is constructed by comprising: a condenser lens 45; a light source laser 46 for a first spot; a light source laser 47 for a second spot; collimating lenses 48 and 49 for the lasers 46 and 47; a beam aplitter 50; light separating filter 51; a dichroic mirror 52; a quarter wavelength plate 53; an analyzer 54; a condenser lens 55; a photodetector 56; a light source laser modulation drive circuit 57 for the first spot; and a light source laser modulation drive circuit 58 for the second spot. A switching signal 59 for recording/reproduction is supplied to the light source laser modulation drive circuit 57 for the first spot. An information signal 60 is supplied to the light source laser modulation drive circuit 58 for the second spot.

The magneto-optic disk device constructed as mentioned above will be described. In Fig. 4, laser beams emitted from the light source laser 46 to form the first laser beam spot and from the light source laser 47 to form the second laser beam spot pass through the optical system, respectively, and are focused by the condenser lens 45 and are focused as a first laser beam spot 61 and a second laser beam spot 62 onto the magneto-optic recording film 43 formed onto the optical disk 41 in a manner such that the centers of the laser beam spots substantially coincide. The light source lasers 46 and 47 can use, for instance, two kinds of semiconductor lasers of different wavelengths.

On the other hand, in the case of this example, the dichroic mirror 52 is set so as to reflect the light emitted from the light source laser 47 and to allow the light emitted from the light source laser 46 to pass. The laser beam emitted from the light source laser 46 for the first light spot becomes the parallel light beam by the collimating lens 48 and enters the dichroic mirror 52. The laser beam is transmitted through the dichroic mirror 52 and enters the beam splitter 50. The laser beam transmitted through the beam splitter 50 is focused by the condenser lens 45 and the first laser beam spot 61 is formed on the magneto-optic recording film 43.

The laser beam spot 61 is controlled by the laser modulation drive circuit 57 so as to become strong in the recording/erasing mode and to become weak in the reproducing mode in accordance with the recording/reproduction switching signal 59.

When reproducing the recorded information from the magneto-optic recording film 43, the light reflected by the magneto-optic recording film 43 is reflected by the beam splitter 50 and is separated from the laser beam from the second laser 47 by the light separating filter 51. Only the polarization rotation component of the magneto-optic recording film 43 is extracted by the analyzer 54 and is taken out as an information reproduced signal from the photodetector 56.

On the other hand, the laser beam emitted from the light source laser 47 to form the second laser beam spot becomes the parallel light beam by the collimating lens 49 in a manner similar to the laser beam emitted from the light source laser 46 for the first light spot and enters the beam splitter 50. The beam splitter 50 reflects the laser beam. The reflected light passes through the quarter wavelength plate 53 and is reflected by the dichroic mirror 52 and is again transmitted through the quarter wavelength plate 53. The polarizing direction is rotated by 90° in total. Then, the laser beam is transmitted through the beam splitter 50 and is focused by the condenser lens 45 and the second laser beam spot 62 is formed on the magneto-optic recording film 43.

The relation between the two laser beam spots 61 and 62 on the magneto-optic recording film 43 will be described by using Fig. 5.

Fig. 5 is a diagram showing an example of the relation between the laser beam spots and the recording pits on the magneto-optic recording film 43. The first laser beam spot 61 is converged to a value near its diffraction limit and is focused along information tracks 64 which are formed by guide grooves 63. The second laser beam spot 62 is focused so that its center is almost the same as that of the first laser beam spot 61, but the diameter of the spot 62 is larger than that of the first laser beam spot 61. Recording pits 65 are formed along the information tracks 64 by changes in intensity of two spots of the first laser beam spot 61 and second laser beam spot 62.

Intensity changes in the recording and reproducing modes of the first and second laser beam spots will be described by using Fig. 6.

Fig. 6 is a diagram showing an example of time-dependent changes of the intensity of the first laser beam spot 61 and of the intensity of the second laser beam spot 62 in the reproducing mode and the recording mode. In the reproducing mode, the intensity of the first laser beam spot 61 is set to a power of about 1 to 2 mW on the magneto-optic recording film 43 and the intensity of the second laser beam spot 62 is set to zero level. Such values are the same as those in the reproducing mode of the conventional magneto-optic disk. Next, in the erasing/rerecording mode, the intensity of the first laser beam spot 61 is maintained at a high value of about 6 to 10 mW on the magneto-optic recording film 43 and the intensity of the second laser beam spot 62 is modulated in a range between the low intensity level and the high intensity level in accordance with the information signal. In Fig. 6, the intensity of the first laser beam spot 61 is controlled by the recording/reproducing switching signal 59 and the intensity of the second laser beam spot 62 is controlled by the information signal 60.

The principle of the information erasing/rerecording method of the invention will be described by using Figs. 7 to 9.

Fig. 7 is a diagram showing temperature characteristics of the coercive force H_{C} and the spontaneous magnetization M_{S} of the magneto-optic recording film 43 composed of a ferrimagnetic material which is used in the present invention. In Fig. 7, T_{ROOM} denotes the room temperature, T_{COMP} indicates a compensation temperature, and T_{C} represents the Curie temperature. At the compensation temperature T_{COMP}, on the magneto-optic recording film 43 constructed by the magnetization in the direction perpendicular to the film surface, the magnitude of the magnetization in the upward direction with respect to the film surface and the magnitude of the magnetization in the downward direction balance with each other, and the apparent spontaneous magnetization disappears and reversely the coercive force becomes maximum. On the other hand, at temperatures on the side lower or higher than the compensation temperature T_{COMP}, the magnitude of the magnetization in the upward or downward magnetizing direction increases and the spontaneous magnetization is generated. Therefore, at temperatures on the sides higher and lower than the compensation temperature T_{COMP} the directions of the spontaneous magnetizations are reversed, and hence the direction of the magnetic field generated in the neighborhood thereof by the local magnetization of the magneto-optic recording film 43 is also reversed. The reversing speed of the direction of magnetization due to a temperature change and the resultant reversing speed of the neighboring magnetic field are determined by the temperature response characteristic of the film 43. It is sufficiently possible to respond in several tens nsec. Therefore, the direction of the neighboring magnetic field which is used to record information can be modulated at a high speed by making the state of a temperature higher than the compensation temperature T_{COMP} and the state of a temperature lower than it by changing the intensity of the laser beam spot.

A state of the flux reversal in the actual recording operation will be described by using Fig. 8. In Fig. 8, it is assumed that the magneto-optic recording film 43 has first been upwardly magnetized.
(1) When the temperature of the magneto-optic recording film 43 is the room temperature T_{ROOM}, the magnetic field 66 caused by the neighboring magnetization 67 is applied to the information recording position downwardly in the direction opposite to the magnetizing direction. However, the magnetizing direction is not reversed since the coercive force of the recording film 43 at the room temperature is high. The upward magnetizing direction is maintained.
(2) The first laser beam spot 61 irradiates the magneto-optic recording film 43 to thereby increase the temperature of the recording film 43. When the temperature of the film 43 reaches the compensation temperature T_{COMP}, the magnetization at the laser beam spot irradiating position decreases with the upward direction maintained in accordance with a change curve of the spontaneous magnetization M_{S} shown in Fig. 7.
(3) When the intensity of the first laser beam spot 61 further rises and the temperature of the magneto-optic recording film 43 exceeds the compensation temperature T_{COMP} and further rises, the magnetizing direction at the laser beam spot irradiating position is reversed from the compensation temperature T_{COMP} as a turning point and the downward magnetization is generated.
(4) Further, when the intensity of the first laser beam spot 61 is raised, and, at the same time, the second laser beam spot 62 having a large spot diameter irradiates so that its center substantially coincides with that of the first laser beam spot 61, the temperature of the magneto-optic recording film 43 rises to a value near Curie temperature T_{C} and the coercive force at the first light spot irradiating position extremely decreases and there occurs a state in which the magnetizing direction is easily reversed by the external magnetic field. If the intensity of the second laser beam spot 62 is set such that the temperature of the recording film 43 reaches the compensation temperature T_{COMP} or higher, the magnetizing direction of the portion, which the second laser beam spot 62 irradiates, is reversed and turns downward. At this time, the direction of the neighboring magnetic field generated by the spontaneous magnetization exerting influence on an area, which the first laser beam spot 61 irradiates, is greatly affected by the direction of the neighboring spontaneous magnetization, and the upward neighboring external magnetic field due to the downward spontaneous magnetization caused by the second laser beam spot 62 becomes dominant. Therefore, the portion, which the first laser beam spot 61 irradiates, is upwardly magnetized by the upward external magnetic field.
(5) When the irradiation of the laser beam spot is stopped and the temperature of the recording film 43 decreases, the magnetizing direction of the recording film 43 is reversed from the compensation temperature T_{COMP} as a turning point and the recording pit 65 constructed by the downward magnetization is formed in the upward magnetization.

A state of the flux reversal in the erasing mode of the information pit will now be described by using Fig. 9. In Fig. 9, it is assumed that the recording pit 65 having the downward magnetization has already been recorded in the upward magnetization in the magneto-optic recording film 43.
(1) When the temperature of the magneto-optic recording film 43 is the room temperature T_{ROOM}, the magnetic field 66 caused by the neighboring magnetization 67 is applied to the information recording position in the same downward direction as the magnetizing direction. Together with the high coercive force of the recording film 43 at the room temperature T_{ROOM}, the stable recording pit 65 is formed.
(2) When the first laser beam spot 61 irradiates the magneto-optic recording film 43, and the temperature of the recording film 43 is raised to a value near the compensation temperature T_{COMP}, the magnetization at the light spot irradiating position decreases maintaining its downward direction in accordance with a change curve of the spontaneous magnetization M_{S} shown in Fig. 7.
(3) When the intensity of the first laser beam spot 61 further rises, and the temperature of the magneto-optic recording film 43 further rises exceeding the compensation temperature T_{COMP}, the magnetization direction of the light spot irradiating position is reversed across the compensation temperature T_{COMP} as a turning point and the upward magnetization is generated.
(4) When the intensity of the first laser beam spot 61 is further increased, the temperature of the recording film 43 rises to a value near Curie temperature T_{C}, and the coercive force at the first light spot irradiating position extremely decreases and there occurs a state in which the flux reversal is easily caused by the external magnetic field 66. At this time, the direction of the magnetic field 66 caused by the neighboring spontaneous magnetization 67 in the area, which the first laser beam spot 61 irradiates, is downward. Therefore, the portion which the first laser beam spot 61 irradiates is downwardly magnetized by the downward magnetic field 66.
(5) When the light irradiation is stopped and the temperature of the recording film 43 is lowered, the magnetization direction of the recording film 43 is reversed across the compensation temperature T_{COMP} as a turning point and the downward magnetization is reversed. Then, the upward magnetic domain in the same direction as that of the neighboring portion is formed, resulting in an erased pit 68.

By merely changing the intensity of the second laser beam spot 62, the upward and downward magnetic domains are formed and such recording/erasing operations can be performed. Therefore, even in the case where information pits are formed on the recording film 43 or even in the case where no information pit is formed, the same operation can be executed. That is, according to the system of the present invention, information can be rewritten by merely overwriting new information without preliminarily erasing by another operation the information pits which have already been formed. Thus, erasing/rerecording (overwriting) equivalent to the operation of the magnetic disk can be realized.

### INDUSTRIAL APPLICABILITY

According to the present invention, in a magneto-optic memory device using a magneto-optic recording medium such as a magneto-optic disk or the like, by merely overwriting and recording new information by two laser beam spots of the first and second laser beam spots on the magneto-optic recording film on which old information has been recorded, the old information can be erased and replaced by the new information. Accordingly, high speed erasing/rerecording operations corresponding to those of the magnetic disk memory device can be realized.

Therefore, the present invention is useful when it is used as a data memory device for a computer or an image recording apparatus.

## Claims

1. A magneto-optic memory device for thermomagnetically recording information on a magneto-optic recording film (43) and reproducing the information by a magneto-optic effect, said memory device comprising:
a magneto-optic recording film having domains with the magnetization being directed in one of two directions of upward or downward magnetization;
light source means (47) for irradiating an information recording position on cording film with a first light spot (61) and a second light spot (62) which has a light spot diameter greater than a diameter of said first light spot and which is substantially concentric with said first light spot;
first modulating means (58) for raising the intensity of said first light spot so that the temperature at the information recording position of said recording film reaches near the Curie temperature when recording the information; and
second modulating means (57) for modulating the intensity of said second light spot so that the temperature around the information recording position of said recording film is changed in accordance with an information signal to be recorded characterised in that said recording film is composed of a single layer of a ferrimagnetic material and has a compensation temperature which lies within a range between room temperature and the Curie temperature of the ferrimagnetic material and said temperature around the recording position varies between a temperature which is lower than the compensation temperature of said recording film and a temperature which is higher than the compensation temperature of said recording film to thereby effect the alignment of the magnetization of the recording film at the recording position in one of said two directions of upward and downward magnetization in accordance with the information signal,
wherein recording of information is performed without external field generating means.

2. A magneto-optic memory device according to Claim 1, characterized in that the alignment of the magnetization at said information recording position due to intensity modulation of said second light spot is independent of the previous alignment of magnetization at said information recording position.

3. A magneto-optic memory device according to Claim 1 or Claim 2, wherein said light source means includes first and second lasers for irradiating said first and second light spots, respectively.

4. A magneto-optic memory device according to Claim 3, wherein said lasers have different wavelengths.

## Patentansprüche

1. Magnetooptische Speichervorrichtung zum thermomagnetischen Aufzeichnen von Information auf einem magnetooptischen Aufzeichnungsfilm (43) und zum Wiedergeben der Information unter Ausnutzung des magnetooptischen Effektes, wobei die Speichervorrichtung umfaßt:
einen magnetooptischen Aufzeichnungsfilm mit Bereichen, in denen die Magnetisierung in einer der beiden Richtungen Aufwärtsmagnetisierung und Abwärtsmagnetisierung ausgerichtet ist;
eine Lichtquelleneinrichtung (47) zum Bestrahlen einer Informationsaufzeichnungsstelle auf einem Aufzeichnungsfilm mit einem ersten Lichtfleck (61) und einem zweiten Lichtfleck (62) der einen Lichtfleckdurchmesser aufweist, der größer ist als ein Durchmesser des ersten Lichtflecks und der im wesentlichen konzentrisch mit dem ersten Lichtfleck ist;
eine erste Moduliereinrichtung (58) zum Erhöhen der Intensität des ersten Lichtflecks, so daß die Temperatur an der Informationsaufzeichnungsstelle des Aufzeichnungsfilms beim Aufzeichnen der Information die Nähe der Curietemperatur erreicht und
eine zweite Moduliereinrichtung (57) zum Modulieren der Intensität des zweiten Lichtflecks, so daß die Temperatur um die Informationsaufzeichnungsstelle des Aufzeichnungsfilms in Übereinstimmung mit einem aufzuzeichnenden Informationssignal geändert wird, dadurch gekennzeichnet, daß der Aufzeichnungsfilm aus einer einfachen Schicht eines ferrimagnetischen Materials zusammengesetzt ist und eine Kompensationstemperatur aufweist, die innerhalb eines Bereichs zwischen Raumtemperatur und der Curietemperatur des ferrimagnetischen Materials liegt, und die Temperatur im Bereich der Aufzeichnungsstelle sich zwischen einer Temperatur, die geringer ist als die Kompensationstemperatur des Aufzeichnungsfilms, und einer Temperatur, die höher ist als die Kompensationstemperatur des Aufzeichnungsfilms, ändert um dadurch die Ausrichtung der Magnetisierung des Aufzeichnungsfilms an der Aufzeichnungsstelle in eine der beiden Richtungen Aufwärtsmagnetisierung und Abwärtsmagnetisierung in Übereinstimmung mit dem Informationssignal zu bewirken,
wobei das Aufzeichnen von Information ohne eine Einrichtung zum Erzeugen eines äußeren Feldes durchgeführt wird.

2. Magnetooptische Speichervorrichtung nach Anpruch 1, dadurch gekennzeichnet, daß das Ausrichten der Magnetisierung an der Informationsaufzeichnungsstelle durch die Intensitätsmodulation des zweiten Lichtflecks unabhängig von der vorherigen Ausrichtung der Magnetisierung an der Informationsaufzeichnungsstelle ist.

3. Magnetooptische Speichervorrichtung nach Anspruch 1 oder 2, bei der die Lichtquelleneinrichtung einen ersten Laser zum Bestrahlen des ersten Lichtflecks und einen zweiten Laser zum Bestrahlen des zweiten Lichtflecks enthält.

4. Magnetooptische Speichervorrichtung nach Anspruch 3, bei der die Laser unterschiedliche Wellenlängen haben.

## Revendications

1. Dispositif de mémorisation magnéto-optique pour l'enregistrement thermomagnétique d'informations sur un film (43) d'enregistrement magnéto-optique et la reproduction des informations par effet magnéto-optique, ledit dispositif de mémorisation comprenant:
un film d'enregistrement magnéto-optique comportant des domaines où la magnétisation est dirigée dans l'une des deux directions de magnétisation vers le haut ou vers le bas;
des moyens de source lumineuse (47) pour illuminer une position d'enregistrement d'informations sur un film d'enregistrement avec un premier point lumineux (61) et un second point lumineux (62) qui a un diamètre de point lumineux supérieur au diamètre dudit premier point lumineux et qui est sensiblement concentrique audit premier point lumineux;
des premiers moyens de modulation (58) pour accroître l'intensité dudit premier point lumineux de sorte que la température au niveau de la position d'enregistrement d'informations dudit film d'enregistrement atteigne une valeur proche du point de Curie, lors de l'enregistrement des informations; et
des seconds moyens de modulation (57) pour moduler l'intensité dudit second point lumineux de sorte que la température autour de la position d'enregistrement d'informations dudit film d'enregistrement soit modifiée selon un signal d'informations à enregistrer,
caractérisé en ce que ledit film d'enregistrement est composé d'une couche unique d'une matière ferrimagnétique et a une température de compensation se situant dans une gamme comprise entre la température ambiante et le point de Curie de la matière ferrimagnétique, et en ce que ladite température autour de la position d'enregistrement varie entre une température qui est inférieure à la température de compensation dudit film d'enregistrement et une température qui est supérieure à la température de compensation dudit film d'enregistrement, de façon à effectuer l'alignement de la magnétisation du film d'enregistrement, au niveau de la position d'enregistrement, dans l'une desdites deux directions de magnétisation vers le haut et vers le bas selon le signal d'informations,
l'enregistrement d'informations étant effectué sans moyens de création de champ extérieurs.

2. Dispositif de mémorisation magnéto-optique selon la revendication 1, caractérisé en ce que l'alignement de la magnétisation au niveau de ladite position d'enregistrement d'informations en conséquence de la modulation d'intensité dudit second point lumineux est indépendant de l'alignement de magnétisation antérieur au niveau de ladite position d'enregistrement d'informations.

3. Dispositif de mémorisation magnéto-optique selon la revendication 1 ou 2, dans lequel lesdits moyens de source lumineuse comprennent un premier laser et un second laser pour produire respectivement lesdits premier et second points lumineux.

4. Dispositif de mémorisation magnéto-optique selon la revendication 3, dans lequel lesdits lasers ont des longueurs d'onde différentes.
